# EUROPEAN PATENT APPLICATION

(11) **EP 2 506 057 A1**
(43) Date of publication of application: **03.10.2012**
(21) Application number: 10833142.2
(22) Date of filing: 19.11.2010
(51) Int. Cl.: G02B 7/04, F03G 7/06

(54) **DRIVE DEVICE**

(30) Priority: 24.11.2009 JP 2009266236; 24.11.2009 JP 2009266242; 24.11.2009 JP 2009266246
(71) Applicant: Konica Minolta Advanced Layers, Inc., Hachioji-shi Tokyo 192-8505 (JP)
(72) Inventor: OKAMOTO Yasuhiro, Hachioji-Shi Tokyo 192-8505 (JP); KONISHI Hirotoshi, Hachioji-Shi Tokyo 192-8505 (JP)
(74) Representative: HOFFMANN EITLE
(86) International application number: PCT/JP2010/070652
(87) International publication number: WO 2011/065296

(57) **Abstract**

A drive mechanism and a drive device which have an SMA actuator applied thereto, wherein the drive mechanism is configured in such a manner that the size of a constituent component contained within a driven part can be increased to enable the driven part to be moved stably and wherein the drive device is configured in such a manner that the diameter of a lens mounted to a lens unit can be increased to enable the lens unit to be smoothly displaced in the optical axis direction. The drive mechanism and the drive device are configured in such a manner that a drive support point (2a) for a lever member (2) is provided at a corner (first corner section (C1)) of an affixed section, a guide body (11) is provided to a second corner (second corner section (C2)), which faces said corner, so as to protrude form the body section of the driven part (1), the guide body (11) is supported slidably, and the drive mechanism and the drive device are provided with a drive guide section (10) provided with a pressing spring (7) for pressing the guide body (11).

## Description

### Technical Field

The present invention relates to a drive device that drives a small mechanical element by use of a shape-memory alloy actuator, and more particularly to a drive device that is suitable for moving a lens unit, as provided in an image-taking optical system in a camera-equipped cellular phone and the like, in the optical axis direction for zooming, focusing, and the like.

### Background Art

In recent years, image sensors incorporated in camera-equipped cellular phones and the like have come to be given increasingly large numbers of pixels, achieving dramatic progress in image quality. This trend is accompanied by demand for focusing, zooming, and other functions in addition to the basic function of image taking.

Adding such functions requires the use of a lens drive device for moving a lens in the optical axis direction, and for those purposes, lens drive devices employing a shape-memory alloy (abbreviated to SMA) actuator have been widely studied these days. These devices produce a contraction force by energizing and thereby heating an SMA, and exploit the contraction force as a lens driving force. They have advantages of allowing easy size and weight reduction and generating a comparatively strong drive force.

On the other hand, by use of SMA in wire form, a linear drive device can be built that exploits variation in length that amounts to several percent (for example, 3% to 5%) of the entire wire length. SMA in wire form may be combined with a scaling mechanism (for example, a lever mechanism) to build a linear drive device having an enlarged amount of displacement.

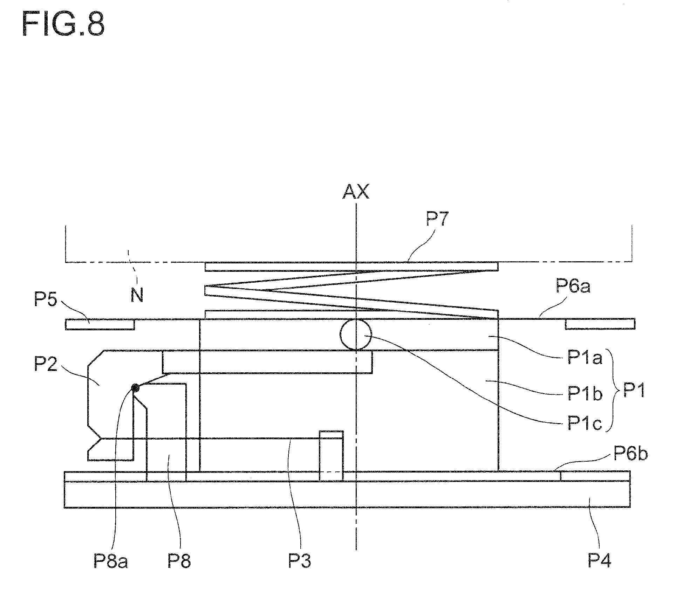

One example of a lens drive mechanism and a drive device that employ an SMA actuator is the drive device disclosed in Patent Document 1. This drive device is provided with SMA in wire form and a lever mechanism that enlarges the amount of displacement, and is built as shown in Fig. 8.

This drive device is a lens drive device that displaces a lens unit P1 as a driven part by use of SMA in wire form and a lever mechanism that enlarges the amount of displacement, and is provided with a lever member P2 which moves the lens unit P1 in the optical axis AX direction (first axis direction), an SMA actuator P3, a base member P4, a top plate P5, parallel plate springs P6a and P6b, a bias spring P7. etc.

The base member P4 is fixed to the member to which the lens drive device is fitted (for example, an image sensor circuit board in a cellular phone), and is a stationary member that forms the bottom face of the lens drive device. The base member P4 is formed in the shape of a rectangular plate as seen on a plan view, and is in its entirety made of a resin material or the like.

The lens unit P1 is cylindrical in shape, and is composed of a lens drive frame P1a which holds an image-taking lens and a lens barrel P1b which houses the lens drive frame P1a. The image-taking lens held inside the lens drive frame P1a has an objective lens, a focus lens, a zoom lens, etc., and constitutes an imaging optical system for forming a subject image on an unillustrated image sensor. The lens drive frame P1a is a so-called lens frame, and moves together with the lens barrel P1b in the optical axis AX direction. On an outer circumferential portion of the objective-side end of the lens drive frame P1a, a pair of engagement projection portions P1c are provided at angular intervals of 180° from each other in the circumferential direction.

The lens unit P1 in a state inserted in an opening formed in the top plate P5 is arranged on the base member P4, with the pair of engagement projection portions P1c located near a pair of opposite corners of the base member P4. The base member P4 and the top plate P5 have the parallel plate springs P6a and P6b fixed to them respectively, and to these parallel plate springs P6a and P6b, the lens unit P1 is fixed. Thus, the lens unit P1 is held so as to be displaceable with respect to the base member P4 etc., with the freedom of its displacement restricted in the direction along the optical axis AX.

In the structure described above, use is made of the lever member P2, which is swingable about, as a rotation center, a lever support portion P8a provided on a support leg P8, and the bias spring P7, which displaces the lens unit P1 in the optical axis AX direction via the SMA actuator P3 and which biases the lens unit P1 in the direction opposite to the displacement direction with a force weaker than the drive force of the lever member P2. The bias spring P7 is a compression coil spring with a diameter that matches the circumferential size of the lens drive frame P1a, and at one end (lower end) makes contact with the top face of the lens drive frame P1a. At the other end (upper end), the bias spring P7 makes contact with a stationary portion N such as the inner surface of the housing of a cellular phone.

As described above, in the conventional lens drive device, the lens unit P1 is supported, so as to be displaceable in the optical axis AX direction, on a fixed portion by use of the parallel plate springs P6a, and the lens unit P1 is displaced in the optical axis AX direction via the lever member P2 and the SMA actuator P3 against the biasing force of the bias spring P7 which biases the lens unit P1 in the optical axis AX direction.

Patent Document 2 discloses an image-taking device that, with a view to providing a compact image-taking device despite having a drive portion, an optical unit is slid and moved along a shaft that movably supports an optical unit, by use of a drive portion having substantially the same size as the width of the image-taking unit.

### List of Citations

### Patent Literature

Patent Document 1: JP-A-2009-37059
Patent Document 2: JP-A-2005-77601

### Summary of Invention

### Technical Problem

Today, image-taking devices are required to be compact, in particular low-profile, while they are simultaneously required to have large-diameter lenses in contradiction to the trend toward compactness. Thus, it is preferable that, within a limited size, the incorporated lens be given as large a diameter as possible. Moreover, even in a compact image-taking device, it is important that the lens unit be displaced in its optical axis direction smoothly and stably.

Inconveniently, however, in the conventional lens drive device, the lens unit is biased with a bias spring, which is a compression coil spring, attached to the circumference of the lens drive frame of the lens unit, and this restricts the diameter of the image-taking lens accommodated on the lens drive frame.

On the other hand, with the method described in Patent Document 2, in which part of the lens unit is formed into a projection having a shaft hole and this shaft hole is slid along a guide shaft provided on a fixed chassis, as the lens unit is made increasingly compact, it becomes impossible to give the shaft hole a sufficient length (fitting length). Consequently, when the lens unit is lifted by use of the lever member, an inclination arises, which makes it difficult to displace the lens unit with sufficient stability.

The present invention has been made against the background discussed above, and aims to provide a drive device employing an SMA actuator which allows stable movement of a driven part and allows enlargement of the diameter of the lens attached to the lens unit. The invention also aims to provide a drive device employing an SMA actuator which suppresses inclination of the driven part during its movement and allows its stable displacement.

### Solution to Problem

To achieve the above aims, according to the present invention, a drive device includes: a fixed portion having a through hole portion; a driven part supported to be reciprocatable in the direction of the axial line of the through hole portion; a lever member which moves the driven part; and a shape-memory alloy actuator which produces a drive force to move the lever member. Here, at a corner of the fixed portion, a drive fulcrum portion for the lever member is provided, and at a second position opposite the corner across the axial line, a drive guide portion is provided which slidably supports a guiding part protruding from a main body portion of the driven part and which has a bias spring that biases the guiding part in a direction against the drive force exerted by the lever member.

According to the invention, in the drive device structured as described above, the fixed portion has a base member which has the through hole portion and which has a rectangular shape as seen in a plan view. Moreover, the lever member has a displacement input portion with which the shape-memory alloy actuator engages and a displacement output portion which makes contact with and displaces the driven part. The drive fulcrum portion and the displacement input portion are provided at a first corner portion of the base member, and the drive guide portion and the displacement input portion are provided at a second corner portion diagonally opposite the first corner portion.

According to the invention, in the drive device structured as described above, the guiding part has integrally therewith a guide shaft which extends in the direction of the axial line, and the drive guide portion has an upper guide sleeve and a lower guide sleeve which slidably hold the guide shaft. The bias spring is a coil spring which is fitted around the guide shaft and attached between the guiding part and the guide sleeves.

According to the invention, in the drive device structured as described above, at third and fourth corner portions other than the first and second corner portions, a holding portion for the shape-memory alloy actuator is provided, and the shape-memory alloy actuator is strung on the displacement input portion in a half-folded shape so as to hook onto the outside of the driven part.

According to the invention, in the drive device structured as described above, at the first corner portion of the base member, a support leg which supports the drive fulcrum portion is provided and the lever member is attached to the support leg. The lever member has a drive arm which engages with an engagement portion provided on the driven part to move the driven part in the direction of the axial line, a fulcrum support portion which swingably supports the drive arm, and an extending arm which is bent from the drive arm so as to extend downward from the drive fulcrum portion. The drive arm is arranged along a circumferential portion of the driven part, and the displacement output portion is provided at the second corner portion.

According to the invention, in the drive device structured as described above, the driven part is a lens unit, the axial line is an optical axis, and the shape-memory alloy actuator is a shape-memory alloy wire.

According to the invention, a drive device includes: a fixed portion having a through hole portion; a driven part supported to be reciprocatable in the direction of the axial line of the through hole portion; a lever member which moves the driven part; and a shape-memory alloy actuator which produces a drive force to move the lever member. Here, on the fixed portion, a drive fulcrum portion for the lever member is provided, and there is further provided a drive guide portion including a guiding part which protrudes from a main body portion of the driven part, an upper guide sleeve which slidably supports an upper end portion of a guide shaft extending from the guiding part in the direction of the axial line, a lower guide sleeve which slidably supports a lower end portion of the guide shaft, and a bias spring which biases the guiding part in a direction against the drive force exerted by the lever member.

According to the invention, in the drive device structured as described above, the fixed portion has a base member which has the through hole portion and which has a rectangular shape as seen in a plan view. Moreover, the lever member has a displacement input portion with which the shape-memory alloy actuator engages and a displacement output portion which makes contact with and displaces the driven part. The drive fulcrum portion and the displacement input portion are provided at a first corner portion of the base member, and the drive guide portion and the displacement input portion are provided at a second corner portion diagonally opposite the first corner portion.

According to the invention, in the drive device structured as described above, the guide shaft is fixed to the guiding part so as to penetrate the guiding part.

According to the invention, in the drive device structured as described above, the guiding part and the guide sleeves are made of resin, and the guiding part is a metal member.

According to the invention, in the drive device structured as described above, the bias spring is a coil spring which is fitted around the guide shaft and which is attached between the top face of the guiding part and the upper guide sleeve.

According to the invention, in the drive device structured as described above, the displacement output portion is provided close to the drive guide portion.

According to the invention, in the drive device structured as described above, in a slide portion on either an outer or inner side of the upper guide sleeve with which the upper end portion of the guide shaft makes contact when the driven part is moved via the lever member, a V groove portion is provided which makes contact with and supports the guide shaft, and in a slide portion on either an inner or outer side of the lower guide sleeve with which the lower end portion of the guide shaft makes contact when the driven part is moved via the lever member, a V groove portion is provided which makes contact with and supports the guide shaft, so that, when the driven part is moved via the lever member, the upper and lower portions of the guide slide while keeping contact with the V groove portions.

According to the invention, in the drive device structured as described above, in the V groove portions, a round-surfaced projection portion is provided which makes contact with the guide shaft.

According to the invention, in the drive device structured as described above, the driven part is a lens unit, the axial line is an optical axis, and the shape-memory alloy actuator is an shape-memory alloy wire. Moreover, at third and fourth corner portions other than the first and second corner portions, a holding portion for the shape-memory alloy wire is provided, and the shape-memory alloy wire is strung on the displacement input portion in a half-folded shape so as to hook onto an outside of the driven part.

According to the invention, in the drive device structured as described above, the lever member has a drive arm which engages with an engagement portion provided on the driven part to move the driven part in the direction of the axial line, a fulcrum support portion which swingably supports the drive arm, and an extending arm which is bent from the drive arm so as to extend downward from the drive fulcrum portion. The drive arm is arranged along a circumferential portion of the driven part, and the displacement output portion is provided at the second corner portion.

According to the invention, in the drive device structured as described above, on at least one, or both, of a lower end portion of the guiding part and an upper end portion of the lower guide sleeve, inward of the guide shaft, an engagement projection portion is provided which defines a first stop position, and on at least one, or both, of an upper end portion of the guiding part and a lower end portion of the upper guide sleeve, outward of the guide shaft, an engagement projection portion is provided which defines a second stop position.

### Advantageous Effects of the Invention

The present invention finds applications in drive mechanisms and drive devices that employ an SMA actuator, and helps realize a drive mechanism that, when a driven part is reciprocated in an axial line direction, allows stable movement of the driven part and that allows suppression of a tilt at the start of operation, and a drive device that allows enlargement of the diameter of the lens attached to a lens unit and that allows smooth displacement of the lens unit in the optical axis direction.

### Brief Description of Drawings

[Fig. 1] is a schematic illustrative diagram of a drive mechanism according to the invention;
[Fig. 2] comprises schematic plan views showing a principal portion of a drive mechanism and a drive device according to the invention, showing a first example at (a) and a second example at (b);
[Fig. 3] comprises schematic diagrams showing engagement between a guide shaft and guide sleeves constituting a drive guide portion according to the invention, showing a schematic side view at (a), a V groove portion in a guide sleeve at (b), and a round-surfaced projection at (c);
[Fig. 4] is a schematic illustrative diagram of a drive mechanism according to a second embodiment of the invention;
[Fig. 5] comprises schematic diagrams showing engagement between a guide shaft and guide sleeves constituting a drive guide portion in the second embodiment, showing their state in a second stop position at (a) and their state in a first stop position at (b);
[Fig. 6] is a side sectional view showing an example of the structure of a drive device provided with a drive mechanism according to the invention;
[Fig. 7] is a plan view of the drive device shown in Fig. 6; and [Fig. 8] is a schematic side view of a conventional lens drive device.

### Description of Embodiments

Embodiments of the present invention will be described below with reference to the accompanying drawings. The same members are identified by the same reference signs, and no overlapping description will be repeated unless necessary.

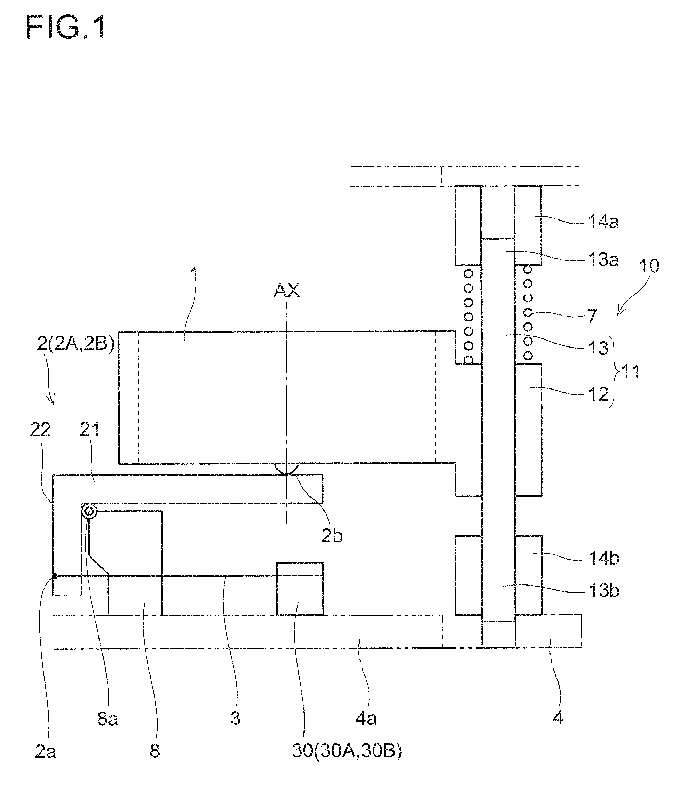

First, a drive mechanism according to the invention will be described with reference to Fig. 1. In this embodiment, the drive device is one for moving a driven part 1 (for example, a lens unit provided with an image-taking lens) in its axial line direction (for example, in the optical axis AX direction). The drive device is provided with: a fixed portion (base member 4) having a through hole portion 4a; a driven part 1 which is supported via a support member attached to the fixed portion so as to be reciprocatable inside the through hole portion in its axial line direction; a shape-memory alloy actuator (SMA actuator) 3 which produces a drive force to move the driven part 1; and a lever member 2 which receives the drive force from the SMA actuator 3 to move the driven part 1.

The drive mechanism is further provided with a bias spring 7 which biases the driven part 1 in a direction against the drive force resulting from the contraction of the SMA actuator 3.

At a corner of the fixed portion (base member 4), a drive fulcrum portion 8a for the lever member 2 is provided, and at a second position opposite that corner across the axial line, a drive guide portion 10 is provided which is provided with the bias spring 7. The drive guide portion 10 slidably supports a guiding part 11 which protrudes form the main body portion of the driven part 1, and biases the guiding part 11 via the bias spring 7 in a direction against the drive force exerted by the lever member 2.

The lever member 2 has, for example: a drive arm 21 which moves the driven part 1 in its axial line direction; a drive fulcrum portion 8a which swingably supports the drive arm 21; and an extending arm 22 which is bent from the drive arm 21 so as to extend downward from the drive fulcrum portion 8a. The lever member 2 thus has an inverted L shape as seen in a side view. Moreover, the lever member 2 is provided with: a displacement input portion 2a which has the SMA actuator 3 strung on it to receive a drive force; and a displacement output portion 2b.

The SMA actuator 3 is, at a middle portion thereof, strung on the displacement input portion 2a, and is, at both ends, held on holding portions 30 (30A and 30B). When the SMA actuator 3 is energized with predetermined electric current, it produces a contracting force, and thereby displaces and drives the lever member 2. That is, the shape-memory alloy actuator is attached to the displacement input portion 2a by being strung on it in a half-folded shape (L shape) so as to hook onto the outside of the driven part 1.

As described above, the drive fulcrum portion 8a and the displacement input portion 2a are provided at a corner of the fixed portion (base member 4), and at a second position opposite that corner, the drive guide portion 10 is provided. In this structure, the bias spring 7 which biases the driven part 1 in a direction against the drive force of the lever member 2 is provided on a portion of the driven part 1 provided away from its main body portion; thus, the bias spring does not engage with the top face of the driven part, eliminating restrictions on the size of the component to be housed in the main body portion of the driven part and making it possible to house a component as large as possible. Moreover, the bias spring 7 which is attached at the second position exerts a biasing force against the drive direction by the lever member 2, advantageously realizing a drive mechanism that allows stable movement of the driven part 1 by use of the SMA actuator 3.

The base member 4 serving as the fixed portion may be circular or polygonal in shape as seen in a plan view, so long as the drive guide portion 10 provided with the bias spring 7 is provided at a position (second position) opposite the position (comer) where the drive fulcrum portion 8a and the displacement input portion 2a are provided on the base member 4, across the axial line. In the case of a drive mechanism for use in a lens drive device that is housed in a rectangular image-taking device, the base member 4 is given a rectangular shape as seen in a plan view; in a circular through hole provided in a central portion of the member, a lens unit having a plurality of circular lenses attached to it and having a circular profile is reciprocatably supported, and members related to the drive device are attached at the four corner portions around.

In one exemplary structure, at one corner of the base member 4 having the through hole portion 4a and having a rectangular shape as seen in a plan view, the drive fulcrum portion 8a for the lever member 2 is provided, and at a second corner opposite that corner across the axial line, the drive guide portion 10 provided with the bias spring 7 for biasing the guiding part 11 protruding from the main body portion of the driven part 1 is provided.

The base member 4 is fixed to a member (for example, an image sensor circuit board in a cellular phone) that adopts the drive device being described, and is, for example, a stationary member which forms the bottom face of, for example, a lens drive device. The base member 4 is in its entirety made of a resin material or the like.

In the embodiment under discussion, to give as large a size as possible to the component housed in the driven part 1 having a circular shape as seen in a plan view and thereby to allow stable movement of the driven part 1, the bias spring 7 is provided at a position where it biases not the main body portion of the driven part 1 but the guiding part 11 protruding from the main body portion. In this way, the drive mechanism according to the embodiment under discussion is provided with a drive guide portion 10 having a bias spring 7 attached at a position protruding from, and away from, the main body of a driven part 1 having a circular shape as seen in a plan view.

The guiding part 11 is provided with a guide collar portion 12 and a guide shaft 13. The guide shaft 13 extends in the optical axis AX direction which is the axial line. The guide shaft 13 is, at an upper end portion 13a thereof, slidably supported by an upper guide sleeve 14a, and, at a lower end portion 13b thereof, slidably supported by a lower guide sleeve 14b. The upper and lower guide sleeves 14a and 14b are members that constitute the drive guide portion 10.

Between the top face of the guide collar portion 12 and the upper guide sleeve 14a, the bias spring 7 is attached so as to surround the guide shaft 13. That is, the bias spring 7 is fitted around the guide shaft 13. Suitably used as the bias spring 7 is, for example, a compression coil spring that is easy to attach around a circumferential portion of the guide shaft 13 and easy to design to exert a predetermined biasing force. The bias spring 7 which is a coil spring has the function of biasing the guiding part 11 in a direction against the drive force exerted by the lever member 2. The biasing force of the bias spring 7 is set weaker than the drive force of the lever member 2, and serves to stabilize the movement of the driven part 1 driven by the lever member 2.

As described above, the guide shaft 13 protruding from the main body portion of the driven part 1 is slidably supported by the upper and lower guide sleeves 14a and 14b, and the bias spring 7 is so attached as to be fitted around the guide shaft 13. Thus, when the driven part 1 is moved, the slide resistance and the biasing force act along the same axis, realizing a drive mechanism that allows stable, smooth movement of the driven part 1. Moreover, since the guide shaft 13 is provided on the driven part 1, a long bearing distance can be secured in a limited space, realizing a structure that ensures satisfactory inclination accuracy of the driven part. It is thus possible to move the driven part stably along its axial line direction with no axis deviation.

In a case where the guide collar portion 12 can be given a sufficient length (slide distance) in the optical axis AX direction, it is also possible to fix the guide shaft 13 to the upper and lower guide sleeves 14a and 14b and slide the guide collar portion 12 and the guide shaft 13 relative to each other. Also in that case, the bias spring 7 is fitted around the guide shaft. However, the embodiment described above, where a long slide distance (bearing distance) can be secured, is preferable because the driven part 1 has a smaller inclination error. In this case, the guiding part 11 is the guide collar portion 12, and the guide shaft 13 forms the drive guide portion 10.

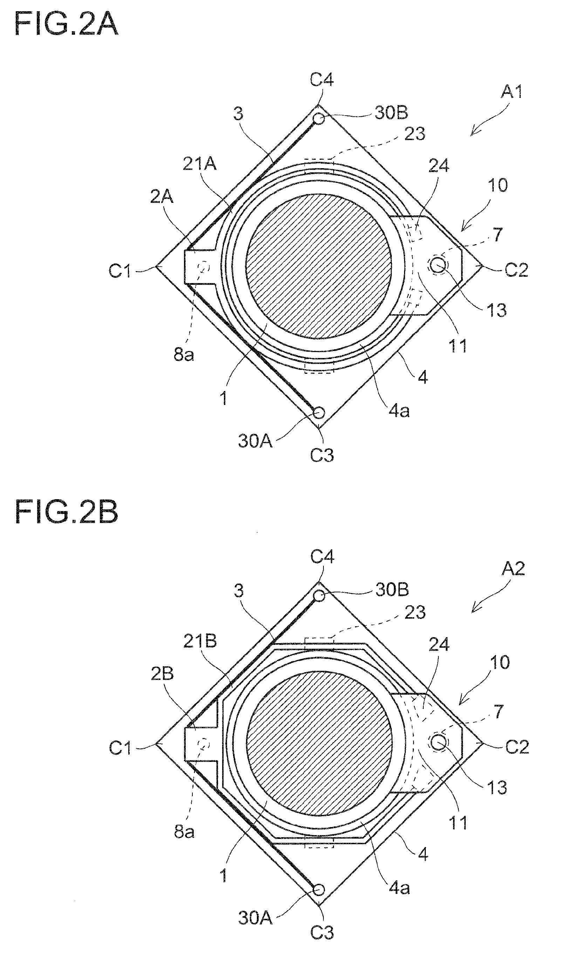

Next, the arrangement of the drive fulcrum portion 8a for the lever member 2 and the drive guide portion 10, which are arranged at diagonally opposite corners of the base member 4 having a rectangular shape as seen in a plan view, will be described with reference to Fig. 2.

Fig. 2(a) is a schematic plan view of a drive device A1 as a first example adopting a drive device according to the invention. In this example, the drive device A1 is provided with, as a lever member, a lever member 2A that is provided with a drive arm 21 A that is curved to describe a circle along a circumferential portion of the driven part 1. Fig. 2(b) is a schematic plan view of a drive device A2 as a second example. In this example, the drive device A2 is provided with, as a lever member, a drive arm 21B bent to describe a polygon along a circumferential portion of the driven part 1. In other respects, these two structures are the same, and therefore the following description deals with the arrangement of the drive guide portion 10 with reference to Fig. 2(a).

The drive device A1 shown in Fig. 2(a) is provided with a base member 4 having a rectangular shape as seen in a plan view and a driven part 1 having a circular shape as seen in a plan view. Thus, the base member 4, which movably supports the driven part 1, has a first corner portion C1, a second corner portion C2, a third corner portion C3, and a fourth corner portion C4.

The drive fulcrum portion 8a for the lever member 2A is provided at the first corner portion C1, and at the second corner portion C2, which is located diagonally to the first corner portion C1, the drive guide portion 10 is provided. Moreover, as support portions for engergizably holding the SMA actuator 3, an energizing holding portion 30A is provided at the third corner portion C3, and another energizing holding portion 30B is provided at the fourth corner portion C4.

The drive guide portion 10 arranged at the second corner portion C2 slidably supports the guide shaft 13 provided in the guiding part 11 protruding from the driven part 1 in a radial direction, and has the function of biasing, via the bias spring 7, the driven part 1 in a direction against the drive force exerted by the lever member 2A. This results in a structure where the circular main body portion of the driven part 1, which is displaceably fitted in the through hole portion 4a of the base member 4, is not interfered by another member, and this makes it possible to give as large a size as possible to the component housed in the driven part 1.

Moreover, although the drive fulcrum portion 8a for the lever member 2 and the drive guide portion 10 are arranged opposite each other at diagonally located corners of the base member 4 having a rectangular shape as seen in a plan view, since the upper and lower end portions of the guide shaft 13 are sildably supported via guide sleeves respectively, a drive device is realized that allows stable movement of the driven part 1.

As described above, in a drive mechanism and a drive device that are provided with: a fixed portion which has a through hole portion and which is provided with a base member having a rectangular shape as seen in a plan view; a driven part which is supported via a support member attached to the base member so as to be reciprocatable inside the through hole portion in its axial line direction; an SMA actuator which produces a drive force for moving the driven part; and a lever member which receives the drive force from the SMA actuator to move the driven part, the lever member is provided with a drive fulcrum portion, a displacement input portion, and a displacement output portion, the drive fulcrum portion and the displacement input portion are provided at a first corner portion of the base member, and at a second corner portion located diagonally to the first corner portion, a drive guide portion is provided which insertably supports a guiding part protruding from the driven part and which is provided with a bias spring that biases the guiding part in a direction against the drive force exerted by the lever member. This makes it possible to obtain a drive mechanism and a drive device that can give as large a size as possible to the component housed in the driven part and that can move the driven part stably.

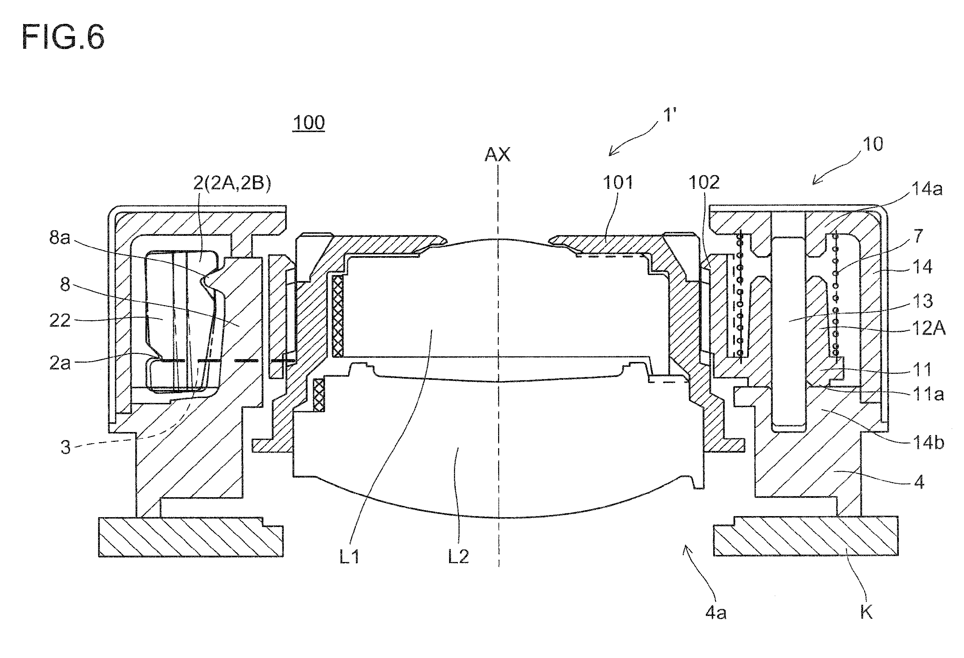

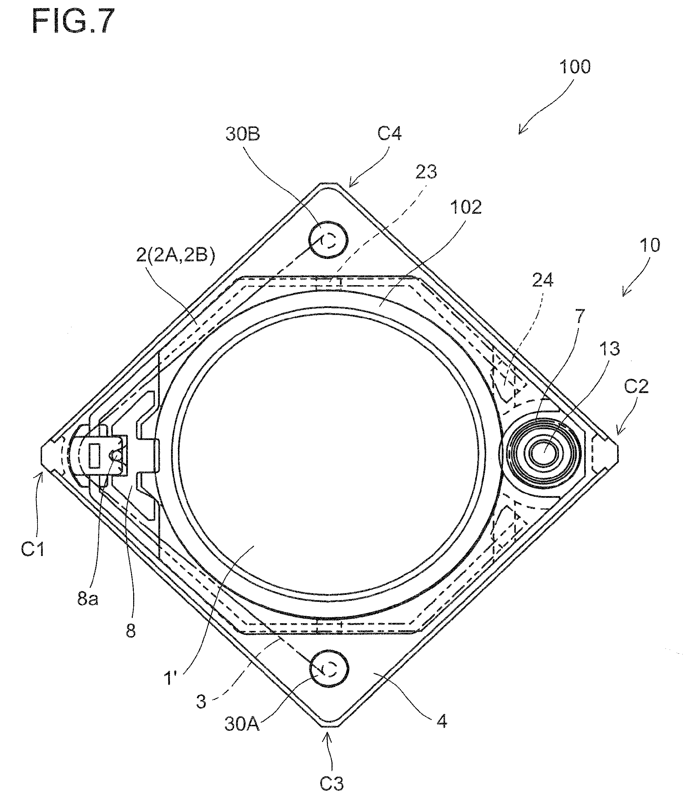

In a case where the driven part 1 is a lens unit, the axial line direction is the optical axis direction, and the SMA actuator is an SMA wire, then it is possible to realize a drive mechanism and a drive device that can give a large lens diameter to the lens attached to the lens unit and that allow smooth displacement of the lens unit. Accordingly, a description will now be given of a drive device for a lens unit which adopts a drive device according to the embodiment under discussion, with reference to Figs. 6 and 7.

In the drive device 100 shown in Fig. 6, on a base member 4 and an outer barrel 14, which serve as a fixed portion, a lens unit 1' composed of a carrier frame 102 attached to a lens frame provided with a plurality of lenses, namely a first lens L1 and a second lens L2, is provided so as to be movable in the optical axis AX direction.

The base member 4 and the outer barrel 14 have, for example as shown in Fig. 7, a rectangular shape as seen in a plan view, and are provided with a through hole portion 4a, with the lens unit 1' supported reciprocatably inside the through hole portion 4a in its axial line direction (in the optical axis AX direction). They are further provided with a shape-memory alloy wire (SMA wire) 3 which produces a drive force for moving the lens unit 1' as a driven part, and a lever member 2 which has the SMA wire 3 strung on it to receive the drive force from the wire to move the lens unit 1'.

The lever member 2 (2A, 2B) is composed of an extending arm 22 which is provided with a displacement input portion 2a having the SMA wire 3 strung on it to receive the drive force, and a drive arm 21 (see Fig. 1) which moves the lens unit 1' in its axial line direction. A support leg 8 provided with a drive fulcrum portion 8a about which the lever member 2 swings is provided at a corner portion (first corner portion) of the rectangle as seen in a plan view. The drive arm 21 may be a drive arm 21 A curved in a circular shape, or a drive arm 21B bent in a polygonal shape, as described above. In any case, the drive arm 21 (21A, 21B) is composed of two arms arranged along a circumferential portion of the lens unit 1'. The drive arm 21 may be so shaped that the two arms are connected together at their tip portions into a single piece.

The drive arm 21 (21A, 21B) can move the lens unit 1' via the displacement output portion of which the tip end or a projection engages with an engagement portion provided on the carrier frame 102 which is the outer frame of the lens unit 1'. The displacement output portion can be provided at an appropriate position with consideration given to the size of the lens unit, the magnitude of the drive force, and the balance of forces (for example, as a displacement output portion 23 making contact with a central portion of the carrier frame 102, or as a displacement output portion 24 provided at a position close o the drive guide portion 10), and is preferably provided at a position close to the drive guide portion 10, opposite the drive fulcrum portion 8a across the axial line.

Providing the displacement output portion 24 at a position close to the drive guide portion 10 helps suppress the moment produced according to the axial distance between the drive guide portion 10 and the displacement output portion 24, and thereby suppress a skew between the guide shaft 13 and the guide sleeves 14, to allow stable, smooth movement of the driven part.

The amount of movement of the lens unit 1' corresponding to the contraction of the SMA wire 3 depends on the ratio of the distance between the drive fulcrum portion 8a and the displacement input portion 2a of lever member 2 to the distance between the drive fulcrum portion 8a and the displacement output portion 24 of the lever member 2. Providing the displacement output portion 24 at a position close to the drive guide portion 10 where the length of the drive arm can be maximized makes it possible to stably enlarge the amount of displacement of the SMA wire, which has a low displacement factor (contraction factor). Conversely, the magnification factor can be increased, and thus the amount of displacement of the SMA can be reduced; this helps suppress degradation of the SMA resulting from its contraction and expansion. Moreover, the lever member 2 has a small rotation angle, and thus variation in the pressure angle to the engagement portion provided on the carrier frame 102 is small, making it possible to obtain linearity in the amount of movement. Furthermore, the friction length with the engagement portion on the carrier frame 102 is short, and this stabilizes the amount of friction, making it possible to achieve stability in the driving of the carrier frame 102.

Moreover, the drive guide portion 10 is provided at the second corner portion C2 diagonal to the first corner portion C1 at which the support leg 8 is provided. In the drive guide portion 10, for example, the guiding part 11 is provided by protruding part of the carrier frame 102 in a radial direction, the guiding part 11 is provided with the guide shaft 13, and its upper and lower end portions are slidably supported by the guide sleeves 14 (14a, 14b) provided on the outer barrel 14 and the base member 4. Also provided is a guide collar portion 12A to which the guide shaft 13 is attached to be supported by it, and the bias spring 7 is attached so as to surround the circumference of the guide collar portion 12A and the upper guide sleeve 14a.

The bias spring 7 is, for example, a compression coil spring, and biases the guiding part 11 in a direction against the drive force exerted by the lever member 2. That is, it biases the lens unit 1' in a direction in which it presses the guiding part 11 against the lower guide sleeve 14b.

Thus, a projection 11a can be provided in a lower end portion of the guiding part 11 so that the state in which it makes contact with the lower guide sleeve 14b may be set as a stand-by position of the lens unit 1', and in addition the inner diameter of the bias spring 7 can be guided by the guide collar portion 12A and the upper guide sleeve 14a to stabilize the expansion and contraction of the spring.

K represents a circuit board, which is electrically connected to the above-mentioned energizing holding portions 30A and 30B. The circuit board K is designed to energize the SMA wire 3 with predetermined electric current to make it produce a contraction force and thus exert a lens driving force.

The operation of the drive device 100 structured as described above will now be described. When the SMA wire 3 attached to the displacement input portion 2a, by being strung on it in a half-folded shape (L shape) so as to hook onto the outside of the lens unit 1' as a driven part, is energized and contracts, the displacement input portion 2a is biased in a direction in which it approaches the optical axis AX, and the lever member 2 swings about the drive fulcrum portion 8a, causing the drive arm 21 to make contact with the engagement portion on the carrier frame 102 and lift the lens unit 1' in the optical axis AX direction.

The biasing force of the bias spring 7 is set weaker than the drive force that the SMA wire 3 gives to the lever member 2, and therefore, when the SMA wire 3 is not operating, the lens unit 1' is biased toward the base member 4. On the other hand, when the SMA wire 3 operates, the lens unit 1' moves, against the biasing force of the bias spring 7, in the opposite direction (toward the objective side). That is, when the SMA wire 3 is not energized, the bias spring 7 applies to the lens unit 1' a bias load which tends to make it return to its home position.

The wire length of the SMA wire 3 is so set that, when the SMA wire 3 is not operating, it remains tight by receiving the biasing force of the bias spring 7 which acts via the lens unit 1' and the lever member 2. That is, the wire length of the SMA wire 3 is so set that, irrespective of its operating state, the SMA wire 3 keeps the lever member 2 in contact with the lens unit 1' (carrier frame 102). In this structure, when the SMA wire 3 operates, its displacement is quickly conveyed to the lever member 2 to make it swing.

When the SMA wire 3 is not heated by being energized, that is, when it is out of operation (expanded), the biasing force of the bias spring 7 presses the lens unit 1' toward the base member 4 to keep it in its home position (original position). At this time, the projection 11a on the lower end portion of the guiding part 11 of the lens unit 1' makes contact with the base member 4 to determine its position. On the other hand, when the SMA wire 3 operates (contracts), this operation applies a drive force to the displacement input portion 2a of the lever member 2 to make the lever member 2 swing, and this swinging causes the displacement output portion 2b (see Fig. 1) to move in the optical axis AX direction. Consequently, the lens unit 1' receives a drive force toward the objective side, and thus the lens unit 1' moves against the biasing force of the bias spring 7. Moreover, at this time, by controlling the electric current with which the SMA wire 3 is energized and thereby adjusting the force in the drive direction, and thus by controlling the drive force with which the lever member 2 is swung, the amount of displacement of the lens unit 1' can be adjusted.

In the drive device 100 structured as described above, as shown in Fig. 7, at a first corner portion C1 of the base member 4 having a rectangular shape as seen in a plan view, the drive fulcrum portion 8a for the lever member 2 (2A, 2B) is provided, and at a second corner portion C2 diagonally opposite the first corner portion C1, the drive guide portion 10 provided with the bias spring 7 for biasing the guiding part protruding from the main body portion of the lens unit 1' is provided. Thus, the full dimensions inside the carrier frame 102 can be used as a component accommodation portion, and this allows enlargement of the lens diameter of the plurality of lenses constituting the image-taking lens group. Moreover, lenses with larger diameters can be attached to a drive device of a given size, and this is effective in size reduction of image-taking devices.

Thus, the drive device 100 can be used in image-taking devices having a compact lens unit that is moved transnationally in the optical axis direction. It is also possible to provide, at a first corner portion C1 of the rectangle as seen in a plan view, the support leg 8 which pivots the lever member 2 (2A, 2B) and is strung with the SMA wire 3, to provide, at a second corner portion C2 opposite the first corner portion C1, the drive guide portion 10 which is provided with the bias spring 7, and to provide, at third and fourth corners C3 and C4 between those corners, the energizing holding portions 30A and 30B for the SMA wire. With this structure, it is possible to realize a drive device that can be incorporated in a compact lens unit, permitting easy translational movement of a lens in the optical axis direction, and hence a lens drive device that can be incorporated in cellular phones and the like.

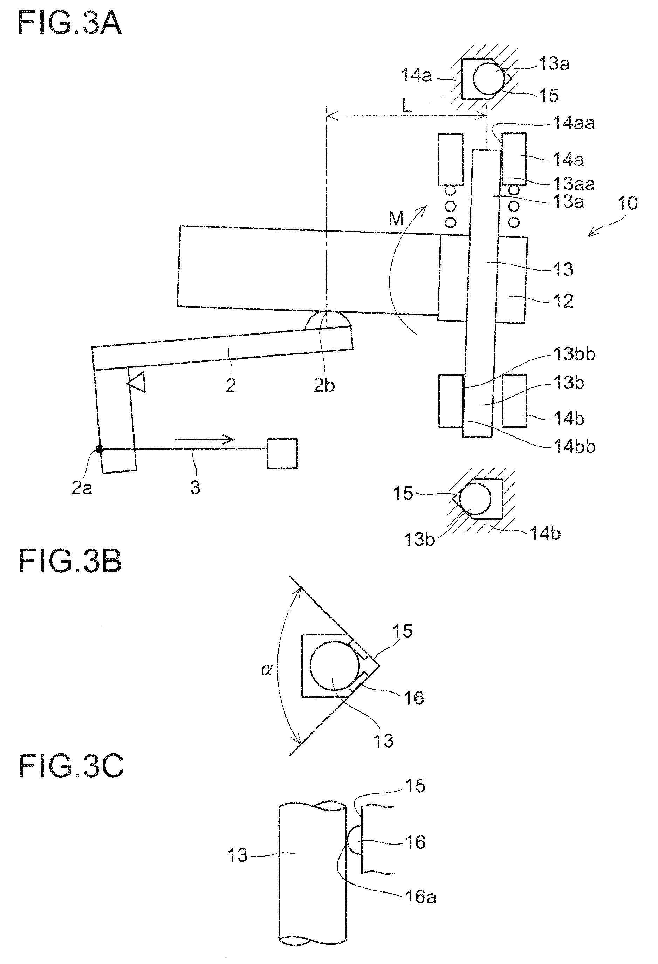

Next, with reference to Fig. 3, the structure of the guide shaft and the guide sleeves will be described.

As shown in Fig. 3 (a), in the embodiment under discussion, the guide shaft 13 is fixed to the guide collar portion 12, with an upper end portion 13a of the guide shaft 13 slidably supported by the upper guide sleeve 14a, and a lower end portion 13b of the guide shaft 13 slidably supported by the lower guide sleeve 14b.

When a drive force is applied to the displacement input portion 2a by use of the SMA wire 3 to make the lever member 2 swing so as to make, via the displacement output portion 2b, the driven part 1 move, a moment M is produced which is commensurate with the distance L between the displacement output portion 2b and the guide shaft 13. The moment M acts to press an outer side 13aa of the upper end portion 13a of the guide shaft against an outer slide portion 14aa of the upper guide sleeve 14a and to press an inner side 13bb of the lower end portion 13b of the guide shaft against an inner slide portion 14bb of the lower guide sleeve 14b.

Moreover, the moment M increases and decreases according to the distance L, and therefore it is preferable that the distance L be as short as possible; by adopting a structure where the displacement output portion 2b is provided close to the drive guide portion 10, when the lever member 2 is swung to move the driven part 1, it is possible to suppress the moment M produced according to the distance L between the displacement output portion 2b and the drive guide portion 10, and thus it is possible to move the driven part 1 stably and smoothly while suppressing the skew between guide shaft 13 and the guide sleeves 14.

In the slide portion on either the outer or inner side of the upper guide sleeve 14a with which the upper end portion 13a of the guide shaft 13 makes contact when the driven part 1 is moved via the lever member 2, a V groove portion 15 is provided which makes contact with and supports the guide shaft 13. Likewise, in the slide portion on either the inner or outer side of the lower guide sleeve 14b with which the lower end portion 13b of the guide shaft 13 makes contact, a V groove portion 15 is provided which makes contact with and supports the guide shaft 13. This allows stabler, smoother movement of the driven part 1 with no axis deviation.

Thus, the V groove portion 15 is provided in the outer slide portion 14aa of the upper guide sleeve 14a to make contact with and support the guide shaft 13 in a state where a moment M as shown in the figure is acting such that the upper end portion 13a of the guide shaft 13 makes contact with the outer side of the upper guide sleeve 14a and that the lower end portion 13b makes contact with the inner side of the lower guide sleeve 14b, and the V groove portion 15 is provided in the inner slide portion 14bb of the lower guide sleeve 14b to make contact with and support the guide shaft 13 in that state. Thus, a structure is realized where, during movement via the lever member 2, the upper and lower end portions of the guide shaft 13 slide while keeping contact with the V groove portions 15 respectively. With this structure, when the driven part 1 is moved by use of the lever member 2, with the upper end portion 13a of the guide shaft 13 kept in contact with the V groove portion 15 in the upper guide sleeve 14a and with the lower end portion 13b of the guide shaft 13 kept in contact with the V groove portion 15 in the lower guide sleeve 14b, while this state is maintained, sliding movement can be achieved; thus, the driven part 1 can be moved stably and smoothly with no axis deviation.

In a case where the displacement output portion 2b of the lever member 2 is located outward of the guide shaft 13, that is, in a case where the moment M produced when the driven part 1 is moved by the lever member 2 is opposite, then, advisably, a V groove portion that makes contact with and supports the guide shaft 13 is provided in the inner slide portion of the upper guide sleeve 14a, and a V groove portion that makes contact with and supports the guide shaft 13 is provided in the outer slide portion of the lower guide sleeve 14b. That is, it is advisable to provide V groove portions in the slide portion on the inner side of the guide sleeve with which the guide shaft 13 makes contact under the moment M produced when the driven part 1 is moved by the lever member 2.

For example, as shown in Fig. 3(b), the V groove portion 15 may be formed to have an opening angle α approximately equal to the right angle (90°) so that the guide shaft 13 is kept in contact with and guided by the V groove. Here, the guide sleeves 14 (14a, 14b) are formed of resin, and thus the material of the guide shaft 13 can be so selected as to have a low friction coefficient and hence good sliding properties with respect to the guide sleeves 14 (14a, 14b), which are formed of resin.

The guide shaft 13 and the guide collar portion 12 (driven part 1) may be formed of the same material as a single unit. The structure where the guide shaft 13 penetrates and is fixed to the guide collar portion 12, however, permits the guide shaft 13 to be formed of a different material from the guide collar portion 12. For example, a material with good sliding properties can be selected. Moreover, a guide shaft 13 made of metal is easy to surface-treat such that its surface have good sliding properties.

The opening angle α is not limited to 90°; it may be selected appropriately to suit the diameter of the guide shaft 13, the size of the drive guide portion 10, the size of the entire device, etc., for example in the range of 60° to 120°.

It is preferable that round-surfaced projection portions 16 that make contact with the guide shaft 13 be provided in the V groove portion 15, because doing so stabilizes the portion of the guide shaft 13 that makes contact with the guide sleeves 14 (14a, 14b), realizing a structure that allows the driven part 1 to be moved more stably and smoothly.

The round-surfaced projection portion 16 may be, for example, in the shape of a round-roofed ridge as shown in Fig. 3(c). With this structure, the round surface 16a of the round-surfaced projection portion 16 keeps contact with the guide shaft 13, supporting it stably while letting it slide.

As described above, according to the embodiment under discussion, it is possible to obtain a drive device employing an SMA actuator wherein, when the driven part is reciprocated in the axial line direction, the driven part can be moved stably.

As described above, in a drive mechanism according to the invention, at one corner of a fixed portion, a drive fulcrum portion for a lever member is provided and, at a second position opposite that corner, a drive guide portion is provided which is provided with a bias spring for biasing a guiding part protruding from a main body portion of a driven part, and thus the bias spring does not engage with the main body portion of the driven part. This eliminates restrictions on the size of the component to be housed in the main body portion of the driven part and thus makes it possible to house a component as large as possible. Moreover, the bias spring that is attached to the drive guide portion produces a biasing force against the drive direction by the lever member, resulting in a drive mechanism that allows stable movement of a driven part that employs a shape-memory alloy actuator.

Moreover, in a drive device provided with a drive mechanism according to the invention, at a first corner portion of a base member that has a rectangular shape as seen in a plan view and that is located away from a main body of a driven part, a drive fulcrum portion for a lever member and a displacement input portion are provided, and at a second corner portion diagonally opposite the first corner portion, a drive guide portion provided with a bias spring is provided. Thus, for example, a structure is realized in which there is no restriction on the size of the component housed in the main body portion of the driven part having a circular shape as seen in a plan view. Moreover, the bias spring that is attached at the second corner portion produces a biasing force against the drive direction by the lever member, and thus a drive device is obtained that allows stable movement of a driven part that employs a shape-memory alloy wire.

As described above, in a drive mechanism according to the invention, owing to the provision of a drive guide portion which biases, via a bias spring, a guiding part protruding from a driven part and which slidably holds an upper end portion and a lower end portion of a guide shaft extending through a guiding part by use of an upper and a lower guide sleeve, it is possible to secure a long bearing distance within a limited space and achieve satisfactory inclination accuracy of the driven part. It is thus possible to move the driven part stably along its axial line direction with no axis deviation.

### <Second Embodiment>

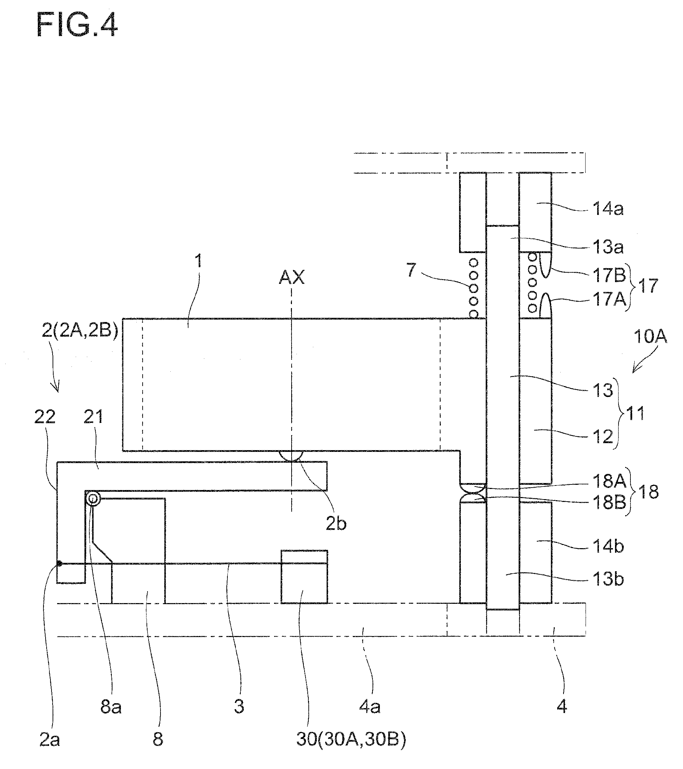

Next, with reference to Fig. 4, a second embodiment of the invention will be described. In this embodiment, the drive guide portion 10A is structured as follows: on at least one, or both, of a lower end portion of the guiding part 11 and an upper end portion of the lower guide sleeve 14b, inward of the guide shaft 13, engagement projection portions 18 (18A, 18B) are provided which define a first stop position; on at least one, or both, of an upper end portion of the guiding part 11 and a lower end portion of the upper guide sleeve 14a, outward of the guide shaft 13, engagement projection portions 17 (17A, 17B) are provided which define a second stop position.

Thus, in a state where, as shown in the figure, the SMA actuator 3 is not operating, for example, the engagement projection portions 18A and 18B remain in contact with each other, resulting in an inoperative state. This first stop position is the initial state, and in this initial state, the SMA actuator 3 is energized to contract and drive the lever member 2 to swing so as to move the driven part 1 in the axial line direction (optical axis AX direction).

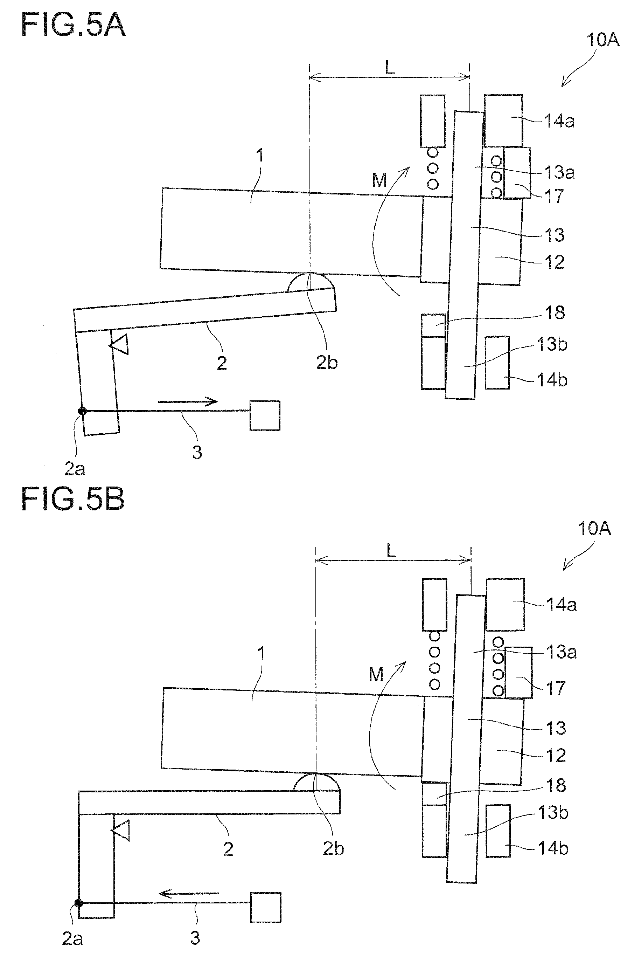

Next, with reference to Fig. 5, a description will be given of the first and second stop positions at which the guiding part makes contact with the upper and lower guide sleeves.

Fig. 5(a) is a schematic diagram showing the second stop position, which is the state where the driven part 1 has moved up to the upper end position; in a case where the driven part 1 is a lens unit, it is in a close-up position.

In this second stop position, via the engagement projection portions 17, an upper end portion of the guiding part 11, for example the top face of the guide collar portion 12 constituting the guiding part 11, and a lower end portion of the upper guide sleeve 14a make contact with each other. Moreover, in this state, the upper end portion 13a of the guide shaft 13 makes contact with, and is guided by, the inner side of the upper guide sleeve 14a.

This is because, when the displacement input portion 2a is fed with a drive force by use of the SMA actuator 3 to make the lever member 2 swing and thereby make, via the displacement output portion 2b, the driven part 1 move, a moment M is produced that is commensurate with the distance L between the displacement output portion 2b and the guide shaft 13.

Thus, in the embodiment under discussion, the engagement projection portions 17 are provided which serve as a contact portion on the side to which the guide shaft 13 inclines when the driven part 1 is displaced. As mentioned above, the engagement projection portions 17 are realized as engagement projection portions 17A and 17B that are provided on at least one, or both, of an upper end portion of the guiding part 11 and a lower end portion of the upper guide sleeve 14a.

Fig. 5(b) is a schematic diagram showing the first stop position, which is the state where the driven part 1 has moved down to the lower end position; in a case where the driven part 1 is a lens unit, it is in an infinity position.

In this first stop position, via the engagement projection portions 18, a lower end portion of the guiding part 11, for example the bottom face of the guide collar portion 12 constituting the guiding part 11, and an upper end portion of the lower guide sleeve 14b make contact with each other. Moreover, in this state, the lower end portion 13b of the guide shaft 13 makes contact with, and is guided by, the inner side of the lower guide sleeve 14b.

Thus, even when a moment M is produced at the start of operation when the displacement input portion 2a is fed with a drive force by using the SMA actuator 3 to make the lever member 2 swing and thereby make, via the lever member 2, the lever member 2 move, the lower end portion 13b of the guide shaft 13 is already in contact with, and being guided by, the inner side of the lower guide sleeve 14b, and this makes it possible to suppress occurrence of a tilt at the start of operation.

As described above, in the drive mechanism according to the embodiment under discussion, engagement projection portions 17 and 18 are provided which serve as a contact portion on the side to which the guide shaft 13 inclines when the driven part 1 is displaced. Thus, a drive mechanism is realized that allows stable, smooth movement of the driven part 1 with no axis deviation in the guide shaft 13 .

A drive device provided with the drive mechanism described above has a structure where the guiding part 11 provided in the drive device 100 shown in Fig. 6 described previously is provided with the engagement projection portions 17 and 18. Specifically, between the upper end of the guiding part 11 and the upper guide sleeve 14a, engagement projection portions 17 (17A, 17B) are provided, and between the lower end of the guiding part 11 and the lower guide sleeve 14b, engagement projection portions 18 (18A, 18B) are provided. Thus, a drive device is realized that allows stable, smooth movement of the driven part 1 with no axis deviation in the guide shaft 13.

The engagement projection portions 18 (18A, 18B) are engagement projection portions that define the first stop position described above, and are provided on at least one, or both, of a lower end portion of the guiding part 11 and an upper end portion of the lower guide sleeve 14b, inward of the guide shaft 13. The engagement projection portions 17 (17A, 17B) are engagement projection portions that define the second stop position described above, and are provided on at least one, or both, of an upper end portion of the guiding part 11 and a lower end portion of the upper guide sleeve 14a, outward of the guide shaft 13.

As described above, in the drive mechanism and the drive device according to the second embodiment, an upper end portion and a lower end portion of a guide shaft are guided, and are slidably held, by use of an upper and a lower guide sleeve, and engagement projection portions are provided that define a first stop position and a second stop position of a guiding part to which the guide shaft is attached. It is thus possible to realize a drive mechanism and a drive device that allow stable movement of a driven part while suppressing axis deviation in the guide shaft and that can also suppress a tilt at the start of operation.

Of the various technical features disclosed in the present specification, main points are summarized below.

According to the invention, a drive mechanism includes: a fixed portion having a through hole portion; a driven part supported to be reciprocatable in the direction of the axial line of the through hole portion; a lever member which moves the driven part; and a shape-memory alloy actuator which produces a drive force to move the lever member. Here, at a corner of the fixed portion, a drive fulcrum portion for the lever member is provided, and at a second position opposite the corner across the axial line, a drive guide portion is provided which slidably supports a guiding part protruding from a main body portion of the driven part and which has a bias spring that biases the guiding part in a direction against the drive force exerted by the lever member.

With this structure, at one corner of the fixed portion, the drive fulcrum portion for the lever member is provided, and at a second position opposite that corner, the drive guide portion provided with the bias spring for biasing the guiding part protruding from the main body portion of the driven part is provided. Thus, the bias spring does not engage with the top face of the driven part, eliminating restrictions on the size of the component to be housed in the main body portion of the driven part and making it possible to house a component as large as possible. Moreover, the bias spring which is attached to the drive guide portion exerts a biasing force against the drive direction by the lever member, advantageously realizing a drive mechanism that allows stable movement of the driven part by use of the shape-memory alloy actuator.

According to the invention, in the drive mechanism structured as described above, the fixed portion has a rectangular shape as seen in a plan view, and includes a base member which has the through hole portion and which has a rectangular shape as seen in a plan view. At a first corner portion of the base member, a support leg which supports the drive fulcrum portion is provided and the lever member is attached to the support leg. Moreover, the lever member has a displacement input portion with which the shape-memory alloy actuator engages and a displacement output portion which makes contact with and displaces the driven part. The drive fulcrum portion and the displacement input portion are provided at the first corner portion, and the drive guide portion is provided at a second corner portion diagonally opposite the first corner portion. With this structure, at the first corner portion of the rectangle as seen in a plan view, away from the main body of the driven part, the drive fulcrum portion for the lever member and the displacement input portion are provided, and at the second corner portion diagonally opposite the first corner portion, the drive guide portion provided with the bias spring is provided. Thus, it is possible to realize a drive mechanism that allows enlargement of the component housed in the main body portion of the driven part that allows stable movement of the driven part by use of the shape-memory alloy actuator.

According to the invention, in the drive mechanism structured as described above, the guiding part has integrally therewith a guide shaft which extends in the direction of the axial line, and the drive guide portion has an upper guide sleeve and a lower guide sleeve which slidably hold the guide shaft. The bias spring is a coil spring which is fitted around the guide shaft and attached between the top face of the guiding part and the upper guide sleeve. With this structure, the guide shaft on the driven part side is slidably supported by the upper and lower guide sleeves, and the bias spring fitted around the guide shaft is attached. It is thus possible to move the driven part stably and smoothly.

According to the invention, in the drive mechanism structured as described above, at third and fourth corner portions other than the first and second corner portions, a holding portion for the shape-memory alloy actuator is provided, and the shape-memory alloy actuator is strung on the displacement input portion in a half-folded shape so as to hook onto the outside of the driven part. With this structure, the displacement input portion can be formed by locking the shape-memory alloy actuator, in a state bent at approximately 90°, onto the lever member. Moreover, a structure is realized in which all the components involved in the driving of the driven part are attached at a corner portion of the rectangle as seen in a plan view, and this makes it possible to maximize the size of the component housed in the main body of the driven part.

According to the invention, in the drive mechanism structured as described above, the driven part is a lens unit, the axial line is an optical axis, and the shape-memory alloy actuator is a shape-memory alloy wire. With this structure, it is possible to obtain a drive mechanism that allows enlargement of the diameter of the lens attached to the lens unit and that allows smooth displacement of the lens unit.

According to the invention, a drive device includes: a fixed portion including a base member which has a rectangular shape as seen in a plan view and which has a through hole portion; a driven part which is supported via a support member attached to the base member so as to be reciprocatable within the through hole portion in the direction of its axial line; a shape-memory alloy wire which produces a drive force to move the driven part; and a lever member which has the shape-memory alloy wire strung on it to receive the drive force from the wire to move the driven part. Here, the lever member has a drive arm which engages with an engagement portion provided on the driven part to move the driven part in the direction of its axial line, a fulcrum support portion which swingably supports the drive arm, and an extending arm which is bent from the drive arm so as to extend downward from the drive fulcrum portion. Moreover, the drive fulcrum portion for the lever member and a displacement input portion which has the shape-memory alloy wire strung on it to receive the drive force are provided at a first corner portion of the rectangle, and at a second corner portion diagonally opposite the first corner portion, a drive guide portion is provided which insertably supports the guiding part protruding from the driven part and which is provided with a bias spring for biasing the guiding part in a direction against a drive force exerted by the lever member.

With this structure, at the first corner portion of the base member having a rectangular shape as seen in a plan view, away from the main body of the driven part, the drive fulcrum portion for the lever member and the displacement input portion are provided, and at the second corner portion diagonally opposite the first corner portion, the drive guide portion provided with the bias spring is provided. Thus, a structure is realized in which there is no restriction on the size of the component housed in the main body portion of the driven part. Moreover, the bias spring attached at the second corner portion produces a biasing force against the drive direction by the lever member, and thus it is possible to obtain a drive device that allows stable movement of the driven part by use of the shape-memory alloy wire.

According to the invention, in the drive device structured as described above, the guiding part has a guide collar portion which protrudes in a radial direction from the main body of the driven part and which extends in the direction of the axial line, and a guide shaft attached so as to penetrate the guide collar portion. The drive guide portion has upper and lower guide sleeves which slidably support the guide shaft, and the bias spring is a coil spring which is fitted around the upper guide sleeve and the guide collar portion and attached between the top face of the guiding part and a frame on which the upper guide sleeve is provided. With this structure, the guide shaft on the driven part side is slidably supported by the upper and lower guide sleeves, and the bias spring, which is a coil spring, is fitted around the guide sleeve; thus, it is possible to hold the bias spring in a stable position and move the driven part stably and smoothly.

According to the invention, in the drive device structured as described above, the driven part is a lens unit, and the axial line is an optical axis. Moreover, at third and fourth corner portions other than the first and second corner portions, energizing holding portions are provided which hold and energize the shape-memory alloy wire, and the shape-memory alloy wire is strung on the displacement input portion in a half-folded shape so as to hook onto the outside of the lens unit. With this structure, it is possible to lock the shape-memory alloy wire, in a state bent at approximately 90°, onto the lever member and energize it to make it contract so as drive the lever member. Moreover, a structure is realized in which all the components involved in the driving of the lens unit are attached at a corner portion of the rectangle as seen in a plan view, and this makes it possible to maximize the size of the component, such as a lens, housed in the lens unit. That is, it is possible to give as large a diameter as possible to the lens incorporated in the lens unit.

According to the invention, a drive mechanism includes: a fixed portion having a through hole portion; a driven part supported to be reciprocatable in the direction of the axial line of the through hole portion; a lever member which moves the driven part; and a shape-memory alloy actuator which produces a drive force to move the lever member. Here, on the fixed portion, a drive fulcrum portion for the lever member is provided, and there is further provided a drive guide portion including a guiding part which protrudes from a main body portion of the driven part, an upper guide sleeve which slidably supports an upper end portion of a guide shaft extending from the guiding part in the direction of the axial line, a lower guide sleeve which slidably supports a lower end portion of the guide shaft, and a bias spring which biases the guiding part in a direction against the drive force exerted by the lever member.

With this structure, owing to the provision of the drive guide portion which biases the guiding part protruding from the driven part and which slidably holds the upper and lower end portions of the guide shaft extending through the guiding part by use of the upper and lower guide sleeves, it is possible to lengthen the bearing distance within a limited space, and to secure satisfactory inclination accuracy of the driven part. Thus, a drive mechanism is realized which allows movement in the axial line direction with no axis deviation and which allows stable movement of the driven part.

According to the invention, in the drive mechanism structured as described above, the fixed portion has a rectangular shape as seen in a plan view, and has a base member which has the through hole portion and which has a rectangular shape as seen in a plan view. At a first corner portion of the base member, a support leg which supports the drive fulcrum portion is provided and the lever member is attached to the support leg. Moreover, the lever member has a displacement input portion with which the shape-memory alloy actuator engages and a displacement output portion which makes contact with and displaces the driven part. The drive fulcrum portion and the displacement input portion are provided at the first corner portion, and the drive guide portion is provided at a second corner portion diagonally opposite the first corner portion. With this structure, at the first corner portion of the rectangle as seen in a plan view, away from the main body of the driven part, the drive fulcrum portion for the lever member and the displacement input portion are provided, and at the second corner portion diagonally opposite the first corner portion, the drive guide portion provided with the bias spring is provided. Thus, it is possible to realize a drive mechanism that allows enlargement of the component housed in the main body portion of the driven part and that allows stable movement of the driven part by use of the shape-memory alloy actuator.

According to the invention, in the drive mechanism structured as described above, the guide shaft is fixed to the guiding part so as to penetrate the guiding part. With this structure, the guide shaft can be made of a material having good sliding properties with respect to the guide sleeves, and this allows smooth, stable movement of the driven part.

According to the invention, in the drive mechanism structured as described above, the guiding part and the guide sleeves are made of resin, and the guiding part is a metal member. With this structure, the use of the guide shaft made of metal having a low friction coefficient and good sliding properties with respect to the guide sleeves made of resin allows smooth movement. Moreover, metal can be surface-treated so that its surface has good sliding properties.

According to the invention, in the drive mechanism structured as described above, the bias spring is a coil spring which is fitted around the guide shaft and which is attached between the top face of the guiding part and the upper guide sleeve. With this structure, the bias spring which is a coil spring is attached so as to be fitted around the guide shaft; thus, when the driven part is moved, the slide resistance and the biasing force act along the same axis, allowing stable, smooth movement of the driven part with no axis deviation.

According to the invention, in the drive mechanism structured as described above, the displacement output portion is provided close to the drive guide portion. With this structure, when the lever member is swung to make the driven part slide, it is possible to suppress the moment that is produced according to the distance between the displacement output portion and the drive guide portion, and thus it is possible to allow stable, smooth movement of the driven part while suppressing a skew between the guide shaft and the guide sleeves.

According to the invention, in the drive mechanism structured as described above, in a slide portion on either an outer or inner side of the upper guide sleeve with which the upper end portion of the guide shaft makes contact when the driven part is moved via the lever member, a V groove portion is provided which makes contact with and supports the guide shaft, and in a slide portion on either an inner or outer side of the lower guide sleeve with which the lower end portion of the guide shaft makes contact when the driven part is moved via the lever member, a V groove portion is provided which makes contact with and supports the guide shaft, so that, when the driven part is moved via the lever member, the upper and lower portions of the guide slide while keeping contact with the V groove portions. With this structure, when the driven part is moved by use of the lever member, with the upper end portion of the guide shaft kept in contact with the V groove portion in the upper guide sleeve and with the lower end portion of the guide shaft kept in contact with the V groove portion in the lower guide sleeve, while this state is maintained, sliding can be achieved; thus, the driven part can be moved stably and smoothly with no axis deviation.

According to the invention, in the drive mechanism structured as described above, in the V groove portions, a round-surfaced projection portion is provided which makes contact with the guide shaft. With this structure, the portion of the guide shaft at which it makes contact with the guide sleeves can be stabilized, and this allows stabler, smoother movement of the driven part.

According to the invention, in the drive mechanism structured as described above, the driven part is a lens unit, the axial line is an optical axis, and the shape-memory alloy actuator is an shape-memory alloy wire. Moreover, at third and fourth corner portions other than the first and second corner portions, a holding portion for the shape-memory alloy wire is provided, and the shape-memory alloy wire is strung on the displacement input portion in a half-folded shape so as to hook onto an outside of the driven part. With this structure, the displacement input portion can be formed by locking the shape-memory alloy wire, in a state bent at approximately 90°, onto the lever member. Moreover, a structure is realized in which all the components involved in the driving of the driven part are attached at a corner portion of the rectangle as seen in a plan view, and this makes it possible to realize a drive mechanism that allows enlargement of the diameter of the lens housed in the lens unit and that allows smooth displacement of the lens unit in the optical axis direction.

According to the invention, a drive device includes: a fixed portion including a base member which has a rectangular shape as seen in a plan view and which has a through hole portion; a driven part which is supported via a support member attached to the base member so as to be reciprocatable within the through hole portion in the direction of its axial line; a shape-memory alloy wire which produces a drive force to move the driven part; and a lever member which has the shape-memory alloy wire strung on it to receive the drive force from the wire to move the driven part. Here, the lever member has a drive arm which engages with the driven part to move the driven part in the direction of its axial line, a fulcrum support portion which swingably supports the drive arm, and an extending arm which is bent from the drive arm so as to extend downward from the drive fulcrum portion. Moreover, the drive fulcrum portion for the lever member and a displacement input portion which has the shape-memory alloy wire strung on it to receive the drive force are provided at a first corner portion of the rectangle, and at a second corner portion diagonally opposite the first corner portion, there is provided a drive guide portion including a guiding part which protrudes from a main body portion of the driven part, an upper guide sleeve which slidably supports an upper end portion of a guide shaft extending from the guiding part in the direction of the axial line, a lower guide sleeve which slidably supports a lower end portion of the guide shaft, and a bias spring which biases the guiding part in a direction against the drive force exerted by the lever member.

With this structure, at the first corner portion of the rectangle as seen in a plan view, away from the main body of the driven part, the drive fulcrum portion for the lever member and the displacement input portion are provided, and at the second corner portion diagonally opposite the first corner portion, the drive guide portion provided with the bias spring is provided. Thus, a structure is realized in which there is no restriction on the size of the component housed in the main body portion of the driven part. Moreover, the upper and lower end portions of the guide shaft extending through the guiding part are guided by the upper and lower guide sleeves, and are slidably held while a biasing force against the drive direction exerted by the lever member is applied by use of the bias spring. Thus, it is possible to lengthen the bearing distance within a limited space, and to secure satisfactory inclination accuracy of the driven part. It is thus possible to realize a drive device that suppresses axis deviation during movement in the axial line direction and that allows stable movement of the driven part.

According to the invention, in the drive device structured as described above, the guiding part protrudes in a radial direction from the main body of the driven part having a circular shape as seen in a plan view, and has a guide collar portion which extends in the axial line direction. The guide shaft is attached so as to penetrate the guide collar portion, and the bias spring is a coil spring fitted around the upper guide sleeve and the guide collar portion and attached between the top face of the guiding part and a frame on which the upper guide sleeve is provided. With this structure, the upper and lower end portions of the guide shaft on the driven part side are slidably supported by the upper and lower guide sleeves, and the bias spring which is a coil spring is attached so as to be fitted around the guide collar portion and the guide sleeves which support the guide shaft. Thus, it is possible to hold the bias spring in a stable position and achieve stable, smooth movement of the driven part.

According to the invention, in the drive device structured as described above, the displacement output portion, at which the drive arm makes contact with and feeds a drive power to the driven part, is provided close to the drive guide portion. With this structure, when the lever member is swung to make the driven part slide, it is possible to suppress the moment that is produced according to the distance between the displacement output portion and the drive guide portion, and thus it is possible to allow stable, smooth movement of the driven part while suppressing a skew between the guide shaft and the guide sleeves.

According to the invention, in the drive device structured as described above, in a slide portion on either an outer or inner side of the upper guide sleeve with which the upper end portion of the guide shaft makes contact when the driven part is moved via the lever member, a V groove portion is provided which makes contact with and supports the guide shaft, and in a slide portion on either an inner or outer side of the lower guide sleeve with which the lower end portion of the guide shaft makes contact when the driven part is moved via the lever member, a V groove portion is provided which makes contact with and supports the guide shaft, so that, when the driven part is moved via the lever member, the upper and lower portions of the guide slide while keeping contact with the V groove portions. With this structure, when the driven part is moved by use of the lever member, with the upper end portion of the guide shaft kept in contact with the V groove portion in the upper guide sleeve and with the lower end portion of the guide shaft kept in contact with the V groove portion in the lower guide sleeve, while this state is maintained, sliding can be achieved; thus, the driven part can be moved stably and smoothly with no axis deviation.

According to the invention, in the drive device structured as described above, in the V groove portions, a round-surfaced projection portion is provided which makes contact with the guide shaft. With this structure, the portion of the guide shaft at which it makes contact with the guide sleeves can be stabilized, and this allows stabler, smoother movement of the driven part.

According to the invention, in the drive device structured as described above, the driven part is a lens unit, and the axial line is an optical axis. Moreover, at third and fourth corner portions other than the first and second corner portions, energizing holding portions are provided which hold and energize the shape-memory alloy wire, and the shape-memory alloy wire is strung on the displacement input portion in a half-folded shape so as to hook onto the outside of the lens unit. With this structure, it is possible to lock the shape-memory alloy wire, in a state bent at approximately 90°, onto the lever member and energize it to make it contract so as drive the lever member. Moreover, a structure is realized in which all the components involved in the driving of the lens unit are attached at a corner portion of the rectangle as seen in a plan view, and this makes it possible to maximize the size of the component, such as a lens, housed in the lens unit. That is, it is possible to give as large a diameter as possible to the lens incorporated in the lens unit.

According to the invention, a drive mechanism includes: a fixed portion having a through hole portion; a driven part supported to be reciprocatable in the direction of the axial line of the through hole portion; a lever member which moves the driven part; and a shape-memory alloy actuator which produces a drive force to move the lever member. Here, at a corner of the fixed portion, a drive fulcrum portion for the lever member is provided, and there is further provided a drive guide portion. The drive guide portion includes a guiding part which protrudes from a main body portion of the driven part, upper and lower guide sleeves which slidably support upper and lower end portions, respectively, of a guide shaft extending from the guiding part in the direction of the axial line, and a bias spring which biases the guiding part in a direction against the drive force exerted by the lever member. Furthermore, on at least one, or both, of a lower end portion of the guiding part and an upper end portion of the lower guide sleeve, inward of the guide shaft, an engagement projection portion is provided which defines a first stop position, and on at least one, or both, of an upper end portion of the guiding part and a lower end portion of the upper guide sleeve, outward of the guide shaft, an engagement projection portion is provided which defines a second stop position.

With this structure, at a corner of the fixed portion, the drive fulcrum portion for the lever member is provided and, at a second position opposite that corner, the drive guide portion provided with the bias spring for biasing the guiding part protruding from the main body portion of the driven part is provided. Thus, a structure is realized in which the bias spring does not engage with the top face of the main body portion of the driven part. This eliminates restrictions on the size of the component to be housed in the main body portion of the driven part and makes it possible to house a component as large as possible. Moreover, the bias spring applies a biasing force against the drive direction by the lever member and defines, in a state where the lower end portion of the guiding part is in contact with the lower guide sleeve, a first stop position and, in a state where the upper end portion of the guiding part is in contact with the upper guide sleeve, a second stop position. Thus, it is possible to realize a drive mechanism that, during movement of the driven part in the axial line direction, allows stable movement of the driven part while suppressing axis deviation in the guide shaft and that can suppress a tilt at the start of operation.

According to the invention, in the drive mechanism structured as described above, the fixed portion has a rectangular shape as seen in a plan view, and has a base member which has the through hole portion and which has a rectangular shape as seen in a plan view. At a first corner portion of the base member, a support leg which supports the drive fulcrum portion is provided and the lever member is attached to the support leg. Moreover, the lever member has a displacement input portion with which the shape-memory alloy actuator engages and a displacement output portion which makes contact with and displaces the driven part. The drive fulcrum portion and the displacement input portion are provided at the first corner portion, and the drive guide portion is provided at a second corner portion diagonally opposite the first corner portion. With this structure, at the first corner portion of the rectangle as seen in a plan view, away from the main body of the driven part, the drive fulcrum portion for the lever member and the displacement input portion are provided, and at the second corner portion diagonally opposite the first corner portion, the drive guide portion provided with the bias spring is provided. Thus, it is possible to realize a drive mechanism that allows enlargement of the component housed in the main body portion of the driven part and that allows stable movement of the driven part by use of the shape-memory alloy actuator.

According to the invention, in the drive mechanism structured as described above, the bias spring is a coil spring which is fitted around the guide shaft and which is attached between the top face of the guiding part and the upper guide sleeve. With this structure, the bias spring which is a coil spring is attached so as to be fitted around the guide shaft; thus, when the driven part is moved, the slide resistance and the biasing force act along the same axis, allowing stable, smooth movement of the driven part with no axis deviation.

According to the invention, in the drive mechanism structured as described above, the displacement output portion is provided close to the drive guide portion. With this structure, when the lever member is swung to make the driven part slide, it is possible to suppress the moment that is produced according to the distance between the displacement output portion and the drive guide portion, and thus it is possible to allow stable, smooth movement of the driven part while suppressing a skew between the guide shaft and the guide sleeves.

According to the invention, in the drive mechanism structured as described above, the driven part is a lens unit, the axial line is an optical axis, and the shape-memory alloy actuator is an shape-memory alloy wire. Moreover, at third and fourth corner portions other than the first and second corner portions, a holding portion for the shape-memory alloy wire is provided, and the shape-memory alloy wire is strung on the displacement input portion in a half-folded shape so as to hook onto an outside of the driven part. With this structure, the displacement input portion can be formed by locking the shape-memory alloy wire, in a state bent at approximately 90°, onto the lever member. Moreover, a structure is realized in which all the components involved in the driving of the driven part are attached at a corner portion of the rectangle as seen in a plan view, and this makes it possible to realize a drive mechanism that allows enlargement of the diameter of the lens housed in the lens unit and that allows smooth displacement of the lens unit in the optical axis direction.

According to the invention, a drive device includes: a fixed portion including a base member which has a rectangular shape as seen in a plan view and which has a through hole portion; a driven part which is supported via a support member attached to the base member so as to be reciprocatable within the through hole portion in the direction of its axial line; a shape-memory alloy wire which produces a drive force to move the driven part; and a lever member which has the shape-memory alloy wire strung on it to receive the drive force from the wire to move the driven part. Here, the lever member has a drive arm which engages with the driven part to move the driven part in the direction of its axial line, a fulcrum support portion which swingably supports the drive arm, and an extending arm which is bent from the drive arm so as to extend downward from the drive fulcrum portion. Moreover, the drive fulcrum portion for the lever member and a displacement input portion which has the shape-memory alloy wire strung on it to receive the drive force are provided at a first corner portion of the rectangle, and at a second corner portion diagonally opposite the first corner portion, there is provided a drive guide portion. The drive guide portion includes a guiding part which protrudes from a main body portion of the driven part, upper and lower guide sleeves which slidably support upper and lower end portions, respectively, of a guide shaft extending from the guiding part in the direction of the axial line, and a bias spring which biases the guiding part in a direction against the drive force exerted by the lever member. Furthermore, on at least one, or both, of a lower end portion of the guiding part and an upper end portion of the lower guide sleeve, inward of the guide shaft, an engagement projection portion is provided which defines a first stop position, and on at least one, or both, of an upper end portion of the guiding part and a lower end portion of the upper guide sleeve, outward of the guide shaft, an engagement projection portion is provided which defines a second stop position.

With this structure, at a first corner portion of the rectangle as seen in a plan view, away from the main body of the driven part, the drive fulcrum portion for the lever member and the displacement input portion are provided and, at a second corner portion diagonally opposite the first corner portion, the drive guide portion provided with the bias spring is provided. Thus, a structure is realized in which there is no restriction on the size of the component to be housed in the main body portion of the driven part. Moreover, the bias spring applies a biasing force against the drive direction by the lever member and defines, in a state where the lower end portion of the guiding part is in contact with the lower guide sleeve, a first stop position and, in a state where the upper end portion of the guiding part is in contact with the upper guide sleeve, a second stop position. Thus, it is possible to realize a drive device that, during movement of the driven part in the axial line direction, allows stable movement of the driven part, that can suppress a tilt at the start of operation, and that allows stable movement of the driven part by use of the shape-memory alloy wire.

According to the invention, in the drive device structured as described above, the guiding part protrudes in a radial direction from the main body of the driven part having a circular shape as seen in a plan view, and has a guide collar portion which extends in the axial line direction and a guide shaft which is attached so as to penetrate the guide collar portion. The drive guide portion has upper and lower guide sleeves which slidably support the guide shaft, and the bias spring is a coil spring fitted around the upper guide sleeve and the guide collar portion and attached between the top face of the guiding part and a frame on which the upper guide sleeve is provided. With this structure, the guide shaft on the driven part side is slidably supported by the upper and lower guide sleeves, and the bias spring which is a coil spring is attached so as to be fitted around the guide collar portion and the guide sleeves which support the guide shaft. Thus, it is possible to hold the bias spring in a stable position and achieve stable, smooth movement of the driven part.

According to the invention, in the drive device structured as described above, the displacement output portion, at which the drive arm makes contact with and feeds a drive power to the driven part, is provided close to the drive guide portion. With this structure, when the lever member is swung to make the driven part slide, it is possible to suppress the moment that is produced according to the distance between the displacement output portion and the drive guide portion, and thus it is possible to allow stable, smooth movement of the driven part while suppressing a skew between the guide shaft and the guide sleeves.

According to the invention, in the drive device structured as described above, the driven part is a lens unit, and the axial line is an optical axis. Moreover, at third and fourth corner portions other than the first and second corner portions, energizing holding portions are provided which hold and energize the shape-memory alloy wire, and the shape-memory alloy wire is strung on the displacement input portion in a half-folded shape so as to hook onto the outside of the lens unit. With this structure, it is possible to lock the shape-memory alloy wire, in a state bent at approximately 90°, onto the lever member and energize it to make it contract so as drive the lever member. Moreover, a structure is realized in which all the components involved in the driving of the lens unit are attached at a corner portion of the rectangle as seen in a plan view, and this makes it possible to maximize the size of the component, such as a lens, housed in the lens unit. That is, it is possible to give as large a diameter as possible to the lens incorporated in the lens unit.

### Industrial Applicability

Drive mechanisms and drive devices according to the present invention are suitable for use as drive mechanisms and drive devices for lens units in image-taking devices in which compactness is sought.

### List of Reference Signs

- 1: driven part
- 1': lens unit
- 2: lever member
- 3: shape-memory alloy wire (SMA actuator)
- 4: base member (fixed member)
- 7: bias spring
- 10, 10A: drive guide portion
- 11: guiding part
- 12: guide collar portion
- 13: guide shaft
- 14a: upper guide sleeve
- 14b: lower guide sleeve
- 15: V groove portion
- 16: round-surfaced projection portion
- 17: engagement projection
- 18: engagement projection
- 100: drive device
- A1: drive device
- A2: drive device
- AX: optical axis (axial line)

## Claims

1. A drive device comprising: a fixed portion having a through hole portion; a driven part supported to be reciprocatable in a direction of an axial line of the through hole portion; a lever member which moves the driven part; and a shape-memory alloy actuator which produces a drive force to move the lever member, wherein
at a corner of the fixed portion, a drive fulcrum portion for the lever member is provided, and
at a second position opposite the corner across the axial line, a drive guide portion is provided which slidably supports a guiding part protruding from a main body portion of the driven part and which has a bias spring that biases the guiding part in a direction against a drive force exerted by the lever member.

2. The drive device according to claim 1, wherein
the fixed portion has a base member which has the through hole portion and which has a rectangular shape as seen in a plan view,
the lever member has a displacement input portion with which the shape-memory alloy actuator engages and a displacement output portion which makes contact with and displaces the driven part, the drive fulcrum portion and the displacement input portion being provided at a first corner portion of the base member, and
the drive guide portion and the displacement input portion are provided at a second corner portion diagonally opposite the first corner portion.

3. The drive device according to claim 1 or 2, wherein
the guiding part has integrally therewith a guide shaft which extends in the direction of the axial line, and
the drive guide portion has an upper guide sleeve and a lower guide sleeve which slidably hold the guide shaft, the bias spring being a coil spring which is fitted around the guide shaft and attached between the guiding part and the guide sleeves.

4. The drive device according to claim 2 or 3, wherein
at third and fourth corner portions other than the first and second corner portions, a holding portion for the shape-memory alloy actuator is provided, and the shape-memory alloy actuator is strung on the displacement input portion in a half-folded shape so as to hook onto an outside of the driven part.

5. The drive device according to claim 2, wherein
at the first corner portion of the base member, a support leg which supports the drive fulcrum portion is provided and the lever member is attached to the support leg,
the lever member has a drive arm which engages with an engagement portion provided on the driven part to move the driven part in the direction of the axial line, a fulcrum support portion which swingably supports the drive arm, and an extending arm which is bent from the drive arm so as to extend downward from the drive fulcrum portion,
the drive arm is arranged along a circumferential portion of the driven part, and
the displacement output portion is provided at the second corner portion.

6. The drive device according to any one of claims 1 to 5, wherein
the driven part is a lens unit,
the axial line is an optical axis, and
the shape-memory alloy actuator is a shape-memory alloy wire.

7. A drive device comprising: a fixed portion having a through hole portion; a driven part supported to be reciprocatable in a direction of an axial line of the through hole portion; a lever member which moves the driven part; and a shape-memory alloy actuator which produces a drive force to move the lever member, wherein
on the fixed portion, a drive fulcrum portion for the lever member is provided, and there is further provided a drive guide portion including a guiding part which protrudes from a main body portion of the driven part, an upper guide sleeve which slidably supports an upper end portion of a guide shaft extending from the guiding part in the direction of the axial line, a lower guide sleeve which slidably supports a lower end portion of the guide shaft, and a bias spring which biases the guiding part in a direction against a drive force exerted by the lever member.

8. The drive device according to claim 7, wherein
the fixed portion has a base member which has the through hole portion and which has a rectangular shape as seen in a plan view,
the lever member has a displacement input portion with which the shape-memory alloy actuator engages and a displacement output portion which makes contact with and displaces the driven part, the drive fulcrum portion and the displacement input portion being provided at a first corner portion of the base member, and
the drive guide portion and the displacement input portion are provided at a second corner portion diagonally opposite the first corner portion.

9. The drive device according to claim 7 or 8, wherein
the guide shaft is fixed to the guiding part so as to penetrate the guiding part.

10. The drive device according to claim 9, wherein
the guiding part and the guide sleeves are made of resin, and the guiding part is a metal member.

11. The drive device according to any one of claims 7 to 10, wherein
the bias spring is a coil spring which is fitted around the guide shaft and which is attached between a top face of the guiding part and the upper guide sleeve.

12. The drive device according to any one of claims 8 to 11, wherein
the displacement output portion is provided close to the drive guide portion.

13. The drive device according to any one of claims 7 to 12, wherein
in a slide portion on either an outer or inner side of the upper guide sleeve with which the upper end portion of the guide shaft makes contact when the driven part is moved via the lever member, a V groove portion is provided which makes contact with and supports the guide shaft, and in a slide portion on either an inner or outer side of the lower guide sleeve with which the lower end portion of the guide shaft makes contact when the driven part is moved via the lever member, a V groove portion is provided which makes contact with and supports the guide shaft, so that, when the driven part is moved via the lever member, the upper and lower portions of the guide slide while keeping contact with the V groove portions.

14. The drive device according to claim 13, wherein
in the V groove portions, a round-surfaced projection portion is provided which makes contact with the guide shaft.

15. The drive device according to any one of claims 8 to 14, wherein
the driven part is a lens unit, the axial line is an optical axis, and the shape-memory alloy actuator is an shape-memory alloy wire, and
at third and fourth corner portions other than the first and second corner portions, a holding portion for the shape-memory alloy wire is provided, and the shape-memory alloy wire is strung on the displacement input portion in a half-folded shape so as to hook onto an outside of the driven part.

16. The drive device according to claim 8, wherein
at the first corner portion of the base member, a support leg which supports the drive fulcrum portion is provided and the lever member is attached to the support leg,
the lever member has a drive arm which engages with an engagement portion provided on the driven part to move the driven part in the direction of the axial line, a fulcrum support portion which swingably supports the drive arm, and an extending arm which is bent from the drive arm so as to extend downward from the drive fulcrum portion,
the drive arm is arranged along a circumferential portion of the driven part, and the displacement output portion is provided at the second corner portion.

17. The drive device according to any one of claims 7 to 16, wherein
on at least one, or both, of a lower end portion of the guiding part and an upper end portion of the lower guide sleeve, inward of the guide shaft, an engagement projection portion is provided which defines a first stop position, and on at least one, or both, of an upper end portion of the guiding part and a lower end portion of the upper guide sleeve, outward of the guide shaft, an engagement projection portion is provided which defines a second stop position.
